(19) Europäisches Patentamt
European Patent Office
Office européen des brevets

(11) **EP 3 319 241 A1**

(12) **EUROPEAN PATENT APPLICATION**

(43) Date of publication:
**09.05.2018 Bulletin 2018/19**

(51) Int Cl.:
***H04B 7/0491*** (2017.01)   ***H04W 4/02*** (2018.01)
***H04W 16/28*** (2009.01)   ***H04W 64/00*** (2009.01)

(21) Application number: **16197725.1**

(22) Date of filing: **08.11.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **V-Count Teknoloji A.S.**
**06800 Ankara (TR)**

(72) Inventor: **BÜYÜKÖSCÜ, Demirhan**
**Istanbul (TR)**

(74) Representative: **Wegner, Hans**
**Bardehle Pagenberg Partnerschaft mbB**
**Patentanwälte, Rechtsanwälte**
**Prinzregentenplatz 7**
**81675 München (DE)**

Remarks:
Amended claims in accordance with Rule 137(2) EPC.

(54) **DEVICE FOR LOCATING MOBILE DEVICES**

(57) The present invention concerns a device (100) for locating mobile devices (200), comprising a base body (10) comprising a plurality of interfaces (1), each adapted for receiving a wireless signal transceiver (20), shielding means (30) arranged between the interfaces (1) for limiting a detection area of the wireless signal transceivers (20), and a processor (3) configured for determining a signal strength of signals received from a mobile device (200) at each of the wireless signal transceivers (20), and for determining a location of the mobile device (200) based on the determined signal strengths.

Fig. 5

**Description**

**1. Technical field**

The present invention generally relates to the field of locating mobile devices, and more particularly to a device for locating mobile devices based on wireless signals.

**2. The prior art**

Various technologies for locating mobile devices, such as smart phones, smart watches, tablets, laptop computers or the like, are known in the art. One way of doing so is by using wireless communication technologies.

For example, US 2010/0238083 A1 discloses a unitized device and method to optimize directional antenna alignment for long-distance communications using the low-cost IEEE 802.11 and related compatible RF-chipsets which are originally designed for short range Wireless-LAN and Wireless-PAN networks. It may be used for driving a directional antenna towards mobile devices with wireless signals in order to locate the mobile devices. However, this requires constantly redirecting the single directional antenna towards the mobile devices, which is difficult to realize.

US 2014/0132412 A1 discloses a short-distance tracking system for persons or objects consisting in the use of a Wi-Fi-emitting device, for example a key fob, carried by the person or object to be tracked, and the Wi-Fi receptor of a smart mobile phone as tracker unit. An application running on the mobile phone can show the distance of the specific device emitting the wireless signal, depending on the detected attenuation level. When the distance increases, the signal will show an attenuation and the application running on the phone will prompt the user to move towards the direction in which the signal intensifies. As the mobile phone approaches the device, the signal will intensify and the application will prompt the user to continue moving in the same direction. However, this approach only indicates the distance of the two interacting devices to one another, but does not enable to locate a wireless mobile device. Further, this requires an additional application to be run on one mobile device, so that the approach cannot be used for mobile devices that do not have the appropriate application installed.

US 2008/0161011 A1 discloses a method and electronic device for determining a location of a mobile device. A receiver may asynchronously receive an access signal from at least three access points of a wireless local area network with the mobile device. A processor may measure an access signal strength for the access signal for each access point. A transmitter may transmit the access signal strengths to a location server to determine the location of the mobile device. However, this requires at least three separate access points and that the access points communicate over a network with a location server. This approach therefore requires a complex distributed hardware architecture and extensive computing and communication efforts.

US 2014/0274112 A1 discloses determining a location of a mobile device based on wireless signals received by one or more other devices. The wireless signals are received by the other devices using at least one directional antenna and/or at least one adaptive array antenna. A location of a transmitting device is determined by two or more devices by determining a direction toward the transmitting device from each of the two or more devices based on wireless signals received by the two or more devices from the transmitting device. The location of the transmitting device is determined based on the location of the two or more devices and the intersection of respective projections directed toward the transmitting device from the two or more devices. However, this requires either directional antennas or at least a plurality of access points. Further, this requires much computing effort in order to locate a wireless mobile device.

It is therefore the technical problem underlying the present invention to provide a device for locating mobile devices which has a simple construction, reduces the amount of communication over the network, reduces the computational effort for locating a mobile device and/or is applicable to a wide range of mobile devices to be located, thereby at least in part overcoming the disadvantages of the prior art.

**3. Summary of the invention**

The invention is defined by the independent claims. Advantageous modifications of embodiments of the invention are defined in the dependent claims.

In the embodiment of claim 1, a device for locating mobile devices is provided. The device comprises a base body comprising a plurality of interfaces, each adapted for receiving a wireless signal transceiver; shielding means arranged between the interfaces for limiting a detection area of the wireless signal transceivers; and a processor configured for determining a signal strength of signals received from a mobile device at each of the wireless signal transceivers; and determining a location of the mobile device based on the determined signal strengths.

According to the invention only one single device is needed to locate mobile devices. By only needing a single device a greater ease of installation can be provided to users of the device. Further, there is no need for extensive communication between multiple devices. Further, the device may be constructed of multiple ordinary hardware parts.

Furthermore, the number of wireless signal transceivers can be increased in order to gain more precise results for the location of the mobile devices.

In an aspect of the invention the shielding means is made of a material that can generate electromagnetic shielding, such as sheet metal, a metal screen, a metal foam and/or aluminium. Accordingly, the shielding means can be formed without the need for expensive processing steps as ordinary materials can be used as shielding means.

In another aspect of the invention the shielding means is made of a material that shields at least 60 % of wireless signals. Accordingly, also cheaper materials can be used for a shielding means which would not jeopardize the device for locating mobile devices.

In yet another aspect of the invention the interfaces are USB interfaces and the wireless signal transceivers are USB dongles. Accordingly, the device can be built of ordinary off-the-shelf hardware parts which is cheap and simple to buy. Further, no custom hardware needs to be build which may speed up the production process.

In another aspect of the invention the processor is configured for determining a location of the mobile device by determining that the mobile device is located within a reception area of the wireless signal transceiver with the maximum signal strength. Accordingly, no resource intensive calculation steps need to be calculated by the device.

In another aspect of the invention the signals received from the mobile device are WiFi signals and/or Bluetooth signals. Accordingly, the invention is not limited to a specific communication standard. To the contrary, every electromagnetic wave may be used as signal based on which a mobile device may be located by the device.

In yet another aspect of the invention the signals received from the mobile device are signals used by the mobile device for sensing wireless networks. Correspondingly, the mobile devices that shall be detected may not need to install a particular software prior to be detected by the device. Instead, any mobile device which regularly senses available wireless networks within its vicinity, such as modern smartphones, may be used with the provided device. This way, it is possible to reliably locate users, since virtually any user nowadays carries a corresponding mobile device.

In an aspect of the invention the device is capable of distinguishing multiple mobile devices based on an identifier comprised in the received signals. Accordingly, the device may detect multiple mobile device simultaneously in an unintrusive manner.

In another aspect of the invention the shielding means is arranged between the interfaces in such a way that the wireless signal transceivers each cover the same amount of a circular plane. Correspondingly, the device may provide the same exactness for the location of a mobile device irrespective of the wireless signal transceiver by which the signal of the mobile device has been detected.

In yet another aspect of the invention the processor is further configured for determining a distance between the mobile device and the device based on the received signal strengths. Correspondingly, the preciseness of the location of the mobile device may be increased.

In one aspect of the invention the shielding means is in physical contact with the processor to provide a cooling for the processor, wherein the shielding means preferably comprises a plurality of cooling fins. Accordingly, the device may avoid an overheating of its internal components during operation. Correspondingly, the lifetime of the device may be increased.

In yet another aspect of the invention the device comprises exactly two wireless signal transceivers, and determining a location of the mobile device comprises determining whether the mobile device is located inside or outside a specific venue. Accordingly, the device may be simple to construct and may need few parts. Further, in many cases a binary decision may be sufficiently accurate.

Additionally or alternatively the device may be arranged at a border area of the venue, e.g. the device may be mounted over an entrance of the venue, such as the door of a shop. Correspondingly, the device may be installed easily.

Additionally or alternatively the interfaces are arranged such that the two wireless signal transceivers extend in a direction parallel to each other, and wherein the shielding means comprises a shape such that the two wireless signal transceivers have distinct reception areas. Accordingly, ordinary hardware parts may be used to construct the device, e.g. a raspberry pi, two Wifi dongles, and a shielding means. Correspondingly, the device may be constructed in a simple and cheap manner.

The present invention also provides a system comprising a plurality of the above-described devices. Accordingly, large venues where a single device of the invention may be insufficient can be monitored for mobile devices.

## 4. Short description of the drawings

In the following detailed description, presently preferred embodiments of the invention are further described with reference to the following figures:

Figs. 1a-b:     A base body of the device for locating mobile devices according to an embodiment of the invention;

Figs. 2a-c:     Interfaces adapted for receiving wireless transceivers of a device for locating mobile devices according to an embodiment of the invention;

Figs. 3a-c: A shielding means arranged between the interfaces of the base body of a device for locating mobile devices according to an embodiment of the invention;

Figs. 4a-b: A base body and a shielding means of a device for locating mobile devices according to an embodiment of the invention;

Fig. 5: A schematic overview of a system including a device according to an embodiment of the invention;

Figs. 6a-b: Schematic diagrams illustrating an arrangement of wireless transceivers according to an embodiment of the invention;

Fig. 7a-c: A schematic overview of systems comprising a plurality of devices for locating mobile devices according to an embodiment of the invention;

Fig. 8: A general structure of a device according to an embodiment of the invention;

Fig. 9: A method for locating a mobile device according to an embodiment of the invention;

Fig. 10: A method for selecting a transceiver from a sample of received wireless signals according to an embodiment of the invention;

**5. Detailed description of preferred embodiments**

In the following, presently preferred embodiments of the invention are described with respect to a device for locating mobile devices.

Hardware overview

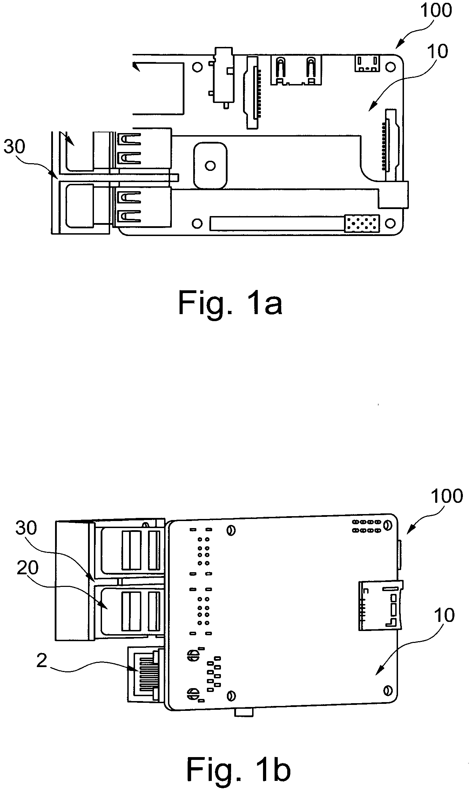

Figs. 1a and 1b show a hardware architecture of a device 100 according to an embodiment in a top view and a bottom view, respectively. As can be seen, the device 100 comprises in this embodiment a base body 10 with four USB interfaces 1. Two of the four interfaces 1 are equipped with wireless signal transceivers 20 (in this case USB WiFi dongles). It will be understood that embodiments of the invention may comprise any number of USB interfaces 1, depending on the particular use case.

Further, the device 100 comprises an Ethernet plug 2, a CPU (central processing unit) 3 and a memory 4. The memory 4 may serve to store information about the mobile devices 200 and the like that the device 100 for locating mobile devices 200 detects. Lastly, the figure shows a shielding means 30 arranged between the interfaces 1 for limiting a detection area of the wireless transceivers 20, which will be described in more detail further below.

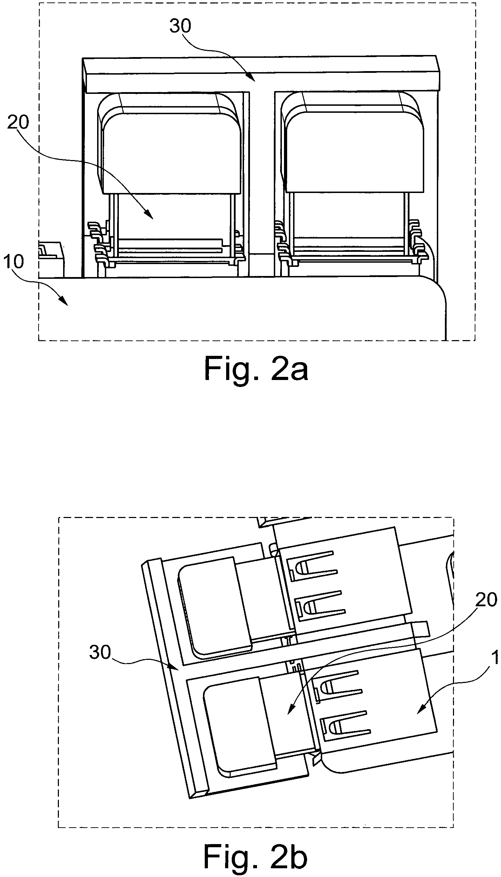

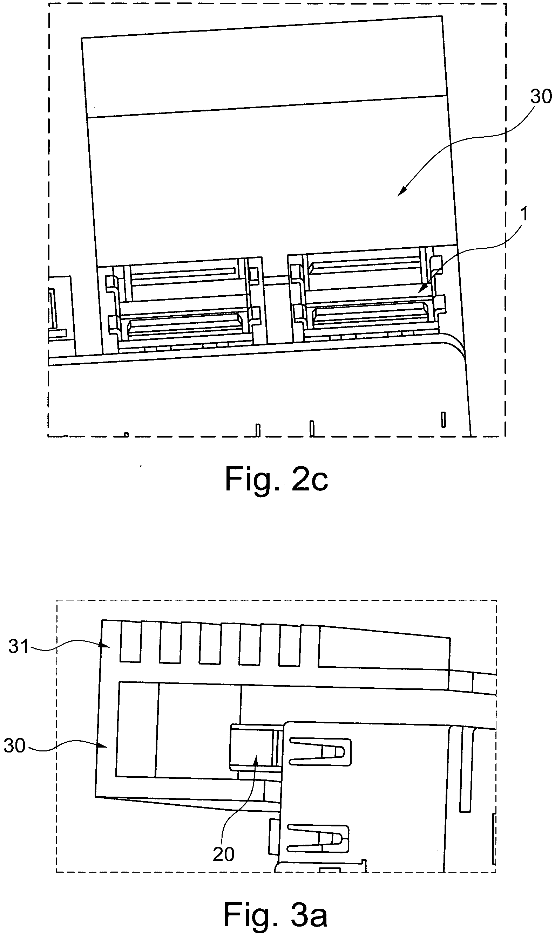

Figs. 2a-c show the USB interfaces 1 and attached wireless signal transceivers 20 in more detail. As can be seen, the shielding 30 forms in this embodiment a box-like structure around each wireless signal transceiver 20 with two open sides, namely one open lateral side (i.e. perpendicular to a main axis of the transceiver dongle 20) and one open bottom side. The purpose of the shielding 30 is to block signals into the defined targeted area of the corresponding USB dongle 20. The shape of the shielding 30 can vary according to USB dongle shape and/or attachment position to the base body 10. In this figure, the dongles 20 are covered to send their signals only to one side of the device 100 so that two separate regions can be detected. The covered area will vary according to the shape of the shielding means 30.

Fig. 3a shows again two USB interfaces 1, each adapted for receiving a wireless signal transceiver 20. Further, the figure shows a shielding means 30 arranged between the interfaces 1 for limiting a detection area of the wireless transceivers 20. Lastly, the figure shows that the shielding means 30 may be formed in such a way that it forms fins 31 at the outer part of the shielding. These fins 31 may serve as heatsink. In an embodiment of the invention the shielding means 30 may touch partially or cover up the whole CPU (central processing unit) 3 and/or PCB (printed circuit board) 6 in order to further regulate the heat in the device 100.

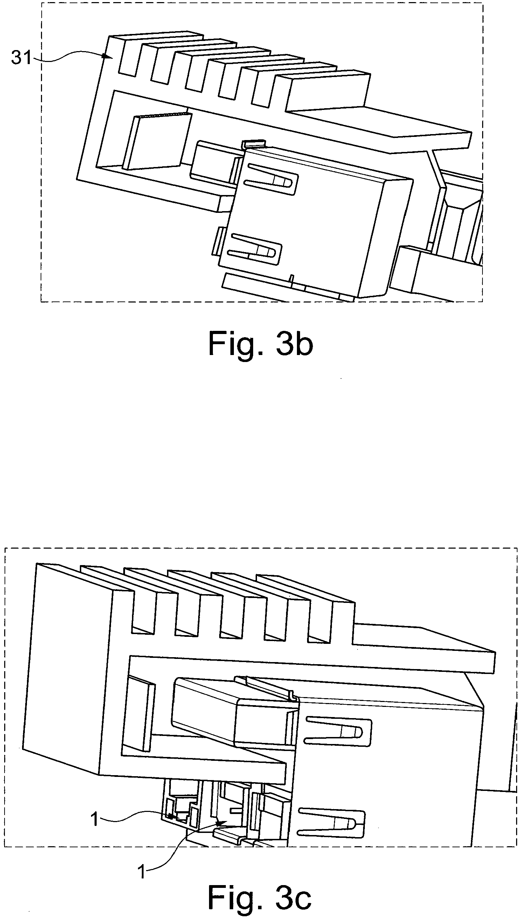

Figs. 3b and 3c show the same embodiment as Fig. 3a but from another perspective. As a result of the different perspectives, different parts of the base body 10 are depicted.

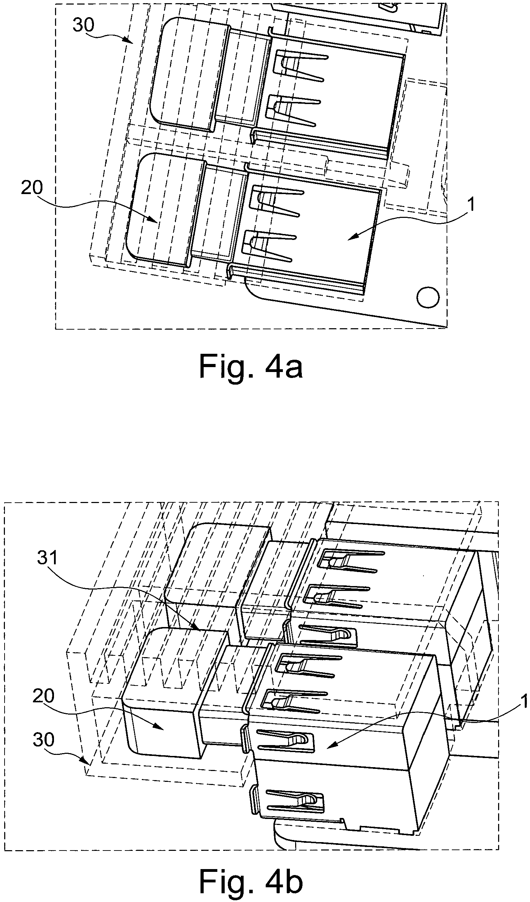

Figs. 4a and 4b show further views of the above embodiment, wherein the shielding 30 is drawn in a transparent manner to reveal the components underneath.

Exemplary use case of the device

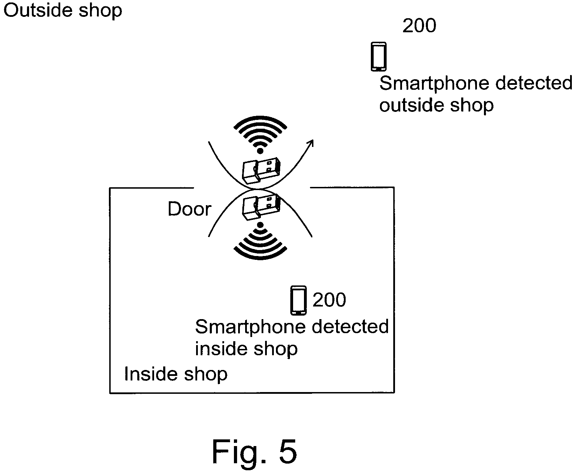

Fig. 5 shows an example of the device 100 used in a people counting use case. While the device 100 may be used in conjunction with camera people counting technology (not depicted in Fig. 5) this is not required.

The device 100 comprises in this embodiment two (preferably exactly two) wireless transceivers 20 that are shielded, leading to modified directional antennas. The device 100 may be placed at the door of a shop. Hence, the device 100 is able to detect any mobile phone 200 (or other mobile device) near the device 100. Further, it may be able to determine whether the mobile phone 200 is inside the shop or outside the shop with the help of real time comparison of wireless signal data (as will be explained further below). Therefore, in this example the device 100 may be able to correctly track and analyze the customer data with only one device 100 placed at only one position, which is a significant simplification compared to the devices known in the prior art.

Systems for locating mobile devices, in particular people counting systems begin to be more and more important for brick-and-mortar retailers to identify and capitalize on opportunities to increase sales, customer satisfaction and loyalty to the brand. To achieve these goals retailers may take advantage of customer counting systems and instore analytics technologies. Therein, wireless technologies may be used to track smartphone signals of customers and creating unique path maps and heat maps. The device 100 according to the invention may be used for focusing on detecting a strength and a direction of wireless signals in order to determine a position of the wireless enabled devices 200 to interpret the customer behavior. This information may be used to determine conversion rate (number of store visitors/number of people passing by the shop), dwell time of customers, retention rate of customers, path map and heat map in the store and the like.

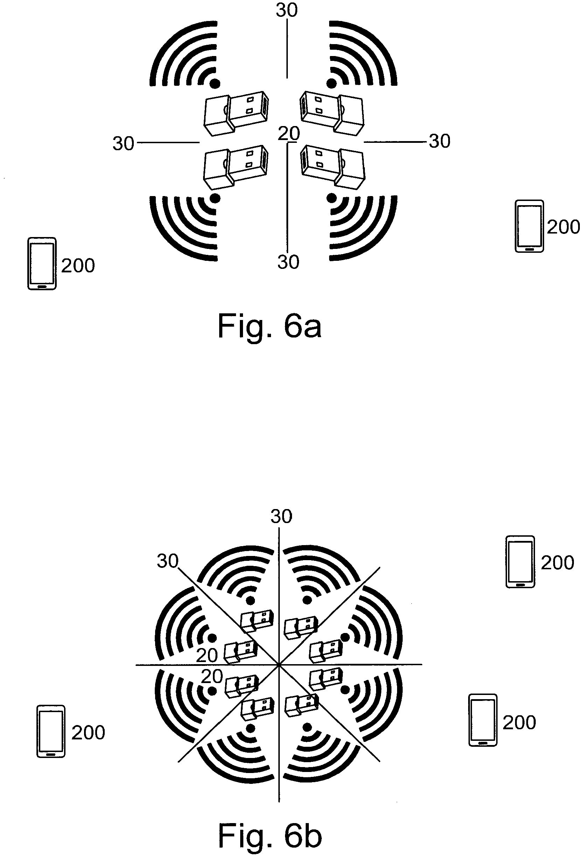

Fig. 6a shows another embodiment of the device 100 comprising four wireless transceivers 20 mounted onto the base body 10. Further, the figure depicts two exemplary mobile devices 200 that are to be located by the device 100.

Fig. 6b shows yet another embodiment of the device 100 comprising eight wireless transceivers 20 mounted onto the base body 10. Further, the figure depicts three mobile devices 200 that are to be located by the device 100.

In order to detect wireless signals, such as e.g. IEEE 802.11 signals, mobile devices 200 transmit to access points a wireless signal which is detectable and traceable using wireless signal transceivers, such as e.g. wireless USB dongles. However, the invention is not limited to IEEE 802.11 signals. It will be understood that every electromagnetic wave could be used to encode a signal, e.g. Bluetooth and the like. The wireless signal transceivers 20 can sense the signal strength of the mobile devices 200 according to the position of the transmitting mobile device 200. This information can be converted to distance information. In an embodiment of the invention, the distance may be calculated from the signal strength using the formula:

$$\text{Distance [m]} = 10\ \widehat{}\ ((27.55 - (20 * \log 10(\text{frequency})) + \text{signalStrength})/20)$$

Therein, the distance is proportional to the signal strength. Thus, a mobile device location can be determined to be on a circle that has a radius that can be calculated based on the strength of the detected wireless signal.

Wireless signals can be directed using reflector materials, such as mainly electrically conductive material which can generate electromagnetic shielding, such as e.g. sheet metal, metal screens, metal foam, and/or aluminum blocks. By using such reflector materials for the shielding means 30, one may essentially construct a modified directed antenna from a conventional USB WiFi dongle and a shielding. By means of directed antenna, one may detect distinct detection areas, wherein the direction of the target can be interpreted from the signal strength.

Further, with respect to figures 6a and 6b, two, four, eight, sixteen or even more wireless transceivers 20 may be mounted onto the same base body 10 of the device 100, with different angles and supporting antennas for direction sensing. In order to enable a large number of wireless transceivers 20 to be mounted onto a small base body 10, additional USB hubs 40 may be connected to the base body 10. Wireless transceivers 20 may be mounted onto the base body 20 to cover a whole 360° circular plane, wherein each wireless transceiver 20 covers the same angle. For example, 4 wireless transceivers could be used to cover each an area corresponding to 90° of the circular plane. Correspondingly, 8 wireless transceivers could be used to cover each 45° areas. Accordingly, a device 100 for locating mobile devices may have a star-like shape, as each wireless transceiver 20 may cover the same amount of degree on a circular plane. In order to shield the corresponding areas from one another, a shielding means may be used, wherein the material that may be used shields preferably at least 60% of the wireless signals.

The device 100 for locating mobile devices 200 may use a plurality of wireless transceivers 20 that are converted to directed antennas for signal sensing. Therein, the number of wireless transceivers may be incremented in order to improve the accuracy of the target direction of the mobile device.

The device 100 for locating mobile devices 200 provides their users with an ease of installation as only one device needs to be installed instead of multiple devices. Further, this provides also a cost advantage. Furthermore, by using only a single device 100 to locate mobile devices, the amount of communication over the network can be reduced, as well as the computational effort for locating a mobile.

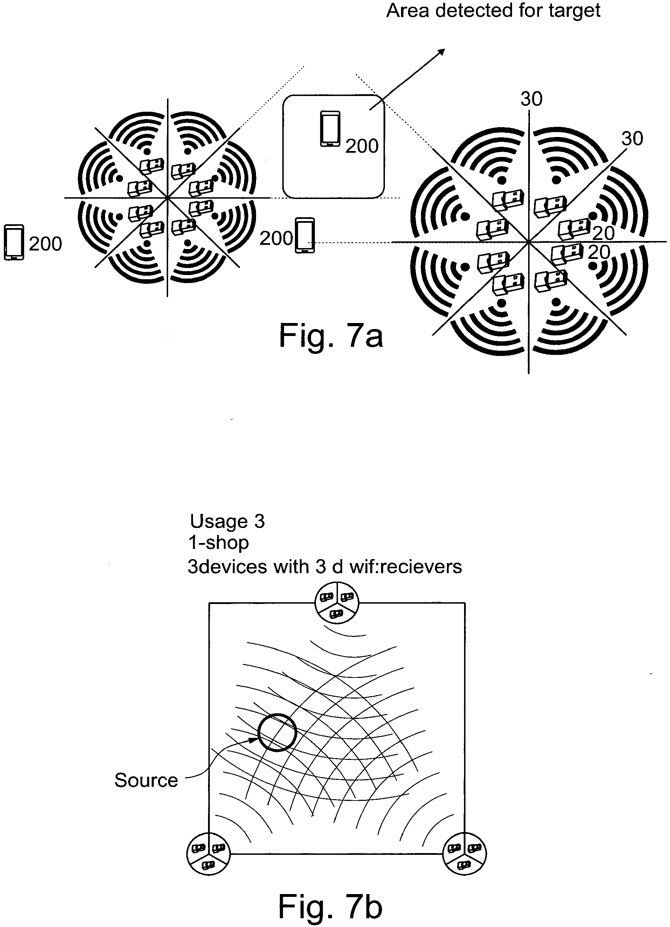

Figs. 7a-c show exemplary use cases for devices 100 for locating mobile devices 200 in a large area. Therein, Fig. 7a shows two devices 100 for locating mobile devices, each comprising eight wireless signal transceivers 20, and three different mobile devices 200 to be located in the large area. Further, one mobile device 200 is deemed to be moving in one direction. As WiFi receivers usually have an upper limit in which they can be detected (around 70 meters), it may occur that the area in which mobile devices 200 shall be detected is larger than the area in which WiFi signals can be received (e.g. a large fair). In such a situation it may be necessary to use multiple devices 100 for locating mobile devices 200 in order to cover the whole area in which mobile devices shall be detectable. As a side effect it is to be noted that in such a situation the mobile devices can be detected even more accurately as there may be overlapping areas in between the multiple devices for locating mobile devices. Further, in such an arrangement the multiple devices 100 for locating mobile devices may transmit their received signal strengths to a server unit that may calculate a location of a mobile device in the covered area.

Fig. 7b shows a use case where there are three devices 100, each comprising three wireless signal transceivers 20, and one moving mobile device 200. Therein, two of the three devices 100 are located in the corners of the area of interest. Further, the mobile device 200 is depicted to be in a location where it can be detected from multiple devices 100.

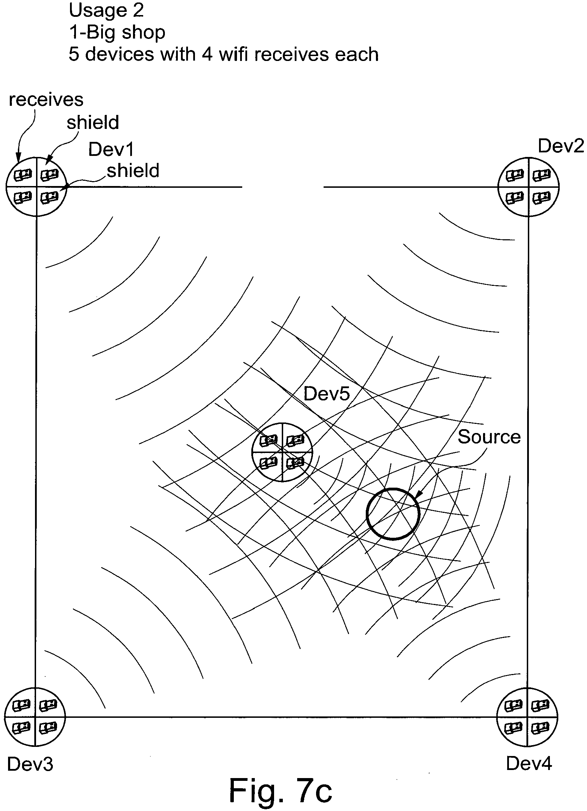

Fig. 7c shows a use case where there are five devices 100, wherein each of the devices comprises four wireless signal transceivers 20. Further, the figure shows one moving mobile device 200 that is to be located in the large area. The arrangement of the devices 100 for locating mobile devices is such that there are four devices 100 located in the peripheral region of the area in which the mobile devices 200 are to be located, and one device 100 is placed in a central region of the area. It can be seen that the mobile device 200 is located at a region where the detection area of multiple devices 100 overlaps.

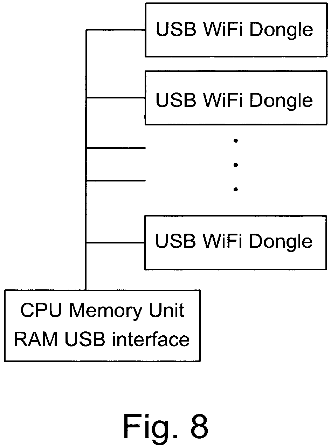

Fig. 8 shows a general structure of a device 100 for locating mobile devices 200 according to a preferred embodiment of the invention. In this specific example the base body 10 comprises a central processing unit (CPU) 3, a memory unit 4, a random access memory (RAM) 5 and a universal serial bus (USB) interface 1. Further, the figure shows three USB wireless dongles that are coupled to the base body 10. It can be derived from the figure that the base body 10 may be able to receive more wireless transceivers 20 to it.

In order to locate the mobile devices 200, the processor 3 of the device 100 is configured for determining a signal strength of signals received from a mobile device 200 at each of the wireless signal transceivers 20, and determining a location of the mobile device 200 based on the determined signal strengths. This will be explained in more detail below.

Signal processing

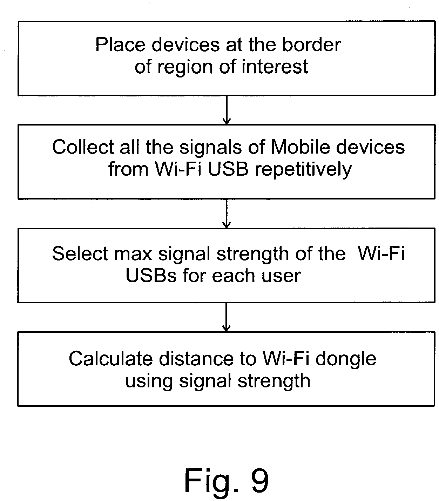

Fig. 9 shows a flowchart of a method for locating a mobile device. Therein, in the first step, the device is placed at the border of a region of interest. Therein, the region of interest corresponds to the region in which mobile devices shall be located. In the second step, wireless signals are collected/sampled, preferably repetitively. For example, the wireless transceivers of the device are sampled according to a certain time interval, e.g. 10 times per second. Said sampling may be executed by every wireless transceiver of the device by listening and/or receiving specific signal frames that mobile devices send in order to detect nearby access points, e.g. beacon frames. A reply to such a signal frame may include the name of the network (e.g. SSID, ESSID), whether encryption is used (and if so, what encryption is used, a supported data rates, and/or channel information about the network. Every wireless transceiver may have a unique MAC address (e.g. 48 bit, 6 pair of hexadecimal numbers etc.). It is to be noted that by default, a NIC (network interface card) ignores traffic that is not addressed to it, which may be done by comparing the destination address of the Ethernet packet with the hardware address. However, most NICs provide modes that allows a NIC to receive all traffic on the network, even if it is not addressed to this NIC, e.g. "promiscuous mode" and "monitor mode". This may also be referred to as "sniffing" the network. Each sample may result in a list of detected mobile devices for every wireless transceiver of the device. This list may include the strength of the received wireless signals from every detected mobile device.

In the third step, for each user, respectively his corresponding mobile device, the device selects the transceiver which received the maximum signal strength as the corresponding receiver to said mobile device.

In the fourth step, the distance from the corresponding wireless transceiver is calculated using the received signal strength. Therein, the distance is proportional to the signal strength. The distance may be calculated by the formula:

$$\text{Distance [m]} = 10 \char`\^ ((27.55 - (20 * \log 10(\text{frequency})) + \text{signalStrength})/20)$$

In addition to the foregoing, the received signal strength at the wireless transceivers may be used to compute a distance measure based on the signal strength, e.g. using the formula above. Accordingly, this may result in a direction in a slice of a circular plane and a calculated distance from the wireless transceiver. Therein, this information may be computed to be a vector from corresponding wireless transceiver towards a mobile device. This may result in polar coordinates from the device for locating mobile devices towards a mobile device that has been detected by the device.

It shall be appreciated that embodiments of the invention may realize all or only a subset of the method steps explained above.

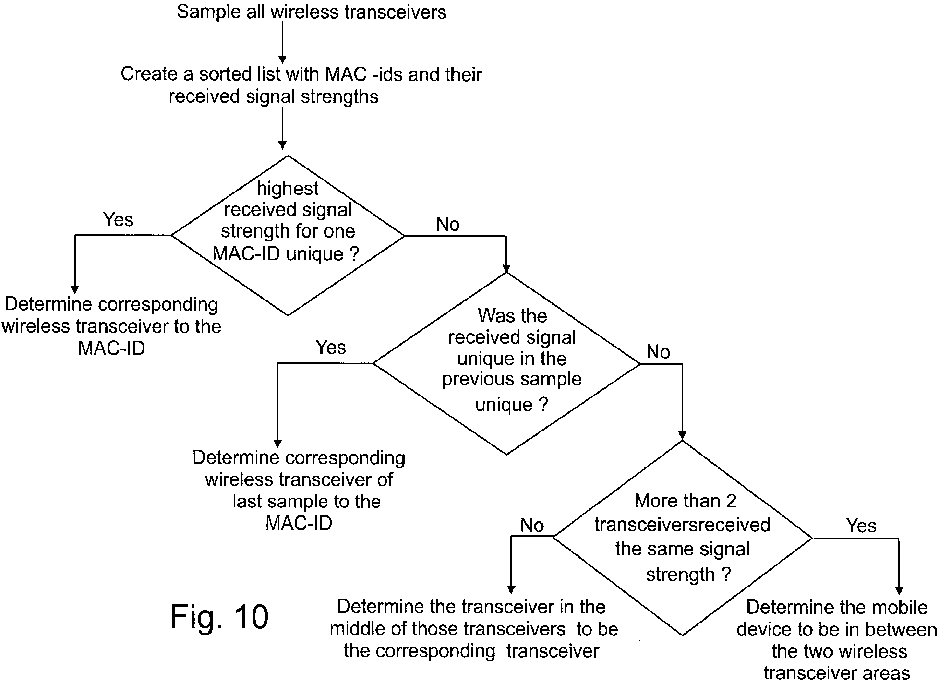

Fig. 10 shows a flowchart, wherein the third step of the method of Fig. 9 is illustrated in more detail. Therein, in step 2, the processor may group the received wireless signals according to their MAC-ID. Then, in step 3, the processor may sort the signals of all the MAC-IDs according to signal strengths individually into lists for each MAC-ID. Then, in step 4, the corresponding region may be determined based on the received signal strength for each MAC-ID signal list. Therein, in step 4.1 it may be determined whether the highest value of the signal strength is unique and if so, the mobile device is assigned to the corresponding wireless transceiver. If the highest value of the signal strength is not unique, it is determined whether in the previous sample the highest value was unique, and if so, setting the previously determined wireless transceiver to the current transceiver again. If in the previous sample, there was no unique highest value, then the number of mobile device is determined. Therein, it may appear that the multiple wireless transceivers are neighboring transceivers with respect to their physical arrangement in the base body. In this case the mobile device is determined to be located at the intersecting line of the two wireless transceivers.

**Claims**

1. A device (100) for locating mobile devices (200), comprising:

   a base body (10) comprising a plurality of interfaces (1), each adapted for receiving a wireless signal transceiver (20);
   shielding means (30) arranged between the interfaces (1) for limiting a detection area of the wireless signal transceivers (20); and
   a processor (3) configured for:

   determining a signal strength of signals received from a mobile device (200) at each of the wireless signal transceivers (20); and
   determining a location of the mobile device (200) based on the determined signal strengths.

2. The device of claim 1, wherein the shielding means (30) is made of a material that can generate electromagnetic shielding, such as sheet metal, a metal screen, a metal foam and/or aluminium.

3. The device of claim 1 or 2, wherein the shielding means (30) is made of a material that shields at least 60 % of wireless signals.

4. The device of any of the preceding claims, wherein the interfaces (1) are USB interfaces and the wireless signal transceivers (20) are USB dongles.

5. The device of any of the preceding claims, wherein the processor (3) is configured for determining a location of the mobile device (200) by determining that the mobile device (200) is located within a reception area of the wireless signal transceiver (20) with the maximum signal strength.

6. The device of any of the preceding claims, wherein the signals received from the mobile device (200) are WiFi signals and/or Bluetooth signals.

7. The device of any of the preceding claims, wherein the signals received from the mobile device (200) are signals used by the mobile device (200) for sensing wireless networks.

8. The device of any of the preceding claims, wherein the device is capable of distinguishing multiple mobile devices (200) based on an identifier comprised in the received signals.

9. The device of any of the preceding claims, wherein the shielding means (30) is arranged between the interfaces (1) in such a way that the wireless signal transceivers (20) each cover the same amount of a circular plane.

10. The device of any of the preceding claims, wherein the processor (3) is further configured for determining a distance between the mobile device (200) and the device (100) based on the received signal strengths.

11. The device of any of the preceding claims, wherein the shielding means (30) is in physical contact with the processor (3) to provide a cooling for the processor (3), wherein the shielding means (30) preferably comprises a plurality of cooling fins (31).

12. The device of any of the preceding claims, wherein the device comprises exactly two wireless signal transceivers (20), and wherein determining a location of the mobile device (200) comprises determining whether the mobile device (200) is located inside or outside a specific venue.

13. The device of claim 12, wherein the device is arranged at a border area of the venue, wherein the device (100) is preferably mounted over an entrance of the venue.

14. The device of claim 12 or 13, wherein the interfaces (1) are arranged such that the two wireless signal transceivers (20) extend in a direction parallel to each other, and wherein the shielding means (30) comprises a shape such that the two wireless signal transceivers (20) have distinct reception areas.

15. A system comprising a plurality of devices (100) according to any of the preceding claims.

**Amended claims in accordance with Rule 137(2) EPC.**

1. A device (100) for locating mobile devices (200), comprising:

   a base body (10) comprising a plurality of interfaces (1), each adapted for receiving a wireless signal transceiver (20);
   shielding means (30) arranged between the interfaces (1) for limiting a detection area of the wireless signal transceivers (20); and
   a processor (3) of the device (100) configured for:

   determining a signal strength of signals received from a mobile device (200) at each of the wireless signal transceivers (20), wherein the signals received from the mobile device (200) are signals used by the mobile device (200) for sensing wireless networks; and
   determining a location of the mobile device (200) based on the determined signal strengths.

2. The device of claim 1, wherein the shielding means (30) is made of a material that can generate electromagnetic shielding, such as sheet metal, a metal screen, a metal foam and/or aluminium.

3. The device of any of the preceding claims, wherein the interfaces (1) are USB interfaces and the wireless signal transceivers (20) are USB dongles.

4. The device of any of the preceding claims, wherein the processor (3) is configured for determining a location of the mobile device (200) by determining that the mobile device (200) is located within a reception area of the wireless signal transceiver (20) with the maximum signal strength.

5. The device of any of the preceding claims, wherein the signals received from the mobile device (200) are WiFi signals and/or Bluetooth signals.

6. The device of any of the preceding claims, wherein the device is capable of distinguishing multiple mobile devices (200) based on an identifier comprised in the received signals.

7. The device of any of the preceding claims, wherein the shielding means (30) is arranged between the interfaces (1) in such a way that the wireless signal transceivers (20) each cover the same amount of a circular plane.

8. The device of any of the preceding claims, wherein the processor (3) is further configured for determining a distance between the mobile device (200) and the device (100) based on the received signal strengths.

9. The device of any of the preceding claims, wherein the shielding means (30) is in physical contact with the processor (3) to provide a cooling for the processor (3), wherein the shielding means (30) preferably comprises a plurality of cooling fins (31).

**10.** The device of any of the preceding claims, wherein the device comprises exactly two wireless signal transceivers (20), and wherein determining a location of the mobile device (200) comprises determining whether the mobile device (200) is located inside or outside a specific venue.

**11.** The device of claim 10, wherein the device is arranged at a border area of the venue, wherein the device (100) is preferably mounted over an entrance of the venue.

**12.** The device of claim 10 or 11, wherein the interfaces (1) are arranged such that the two wireless signal transceivers (20) extend in a direction parallel to each other, and wherein the shielding means (30) comprises a shape such that the two wireless signal transceivers (20) have distinct reception areas.

**13.** A system comprising a plurality of devices (100) according to any of the preceding claims.

Fig. 1a

Fig. 1b

Fig. 2a

Fig. 2b

Fig. 2c

Fig. 3a

31

Fig. 3b

1

1

Fig. 3c

Fig. 4a

Fig. 4b

Outside shop

200

Smartphone detected
outside shop

Door

200
Smartphone detected
inside shop

Inside shop

Fig. 5

Fig. 6a

Fig. 6b

Area detected for target

30

30

200

200

200

20

20

## Fig. 7a

Usage 3
1-shop
3devices with 3 d wif:recievers

Source

## Fig. 7b

Usage 2
1-Big shop
5 devices with 4 wifi receives each

receives
shield
Dev1
shield

Dev2

Dev5

Source

Dev3

Dev4

# Fig. 7c

USB WiFi Dongle

USB WiFi Dongle

•
•
•

USB WiFi Dongle

CPU Memory Unit
RAM USB interface

# Fig. 8

```
┌─────────────────────────────────────────┐
│         Place devices at the border      │
│            of region of interest         │
└─────────────────────────────────────────┘
                     │
                     ▼
┌─────────────────────────────────────────┐
│    Collect all the signals of Mobile     │
│        devices from Wi-Fi USB            │
│              repetitively                │
└─────────────────────────────────────────┘
                     │
                     ▼
┌─────────────────────────────────────────┐
│   Select max signal strength of the      │
│        Wi-Fi USBs for each user          │
└─────────────────────────────────────────┘
                     │
                     ▼
┌─────────────────────────────────────────┐
│    Calculate distance to Wi-Fi dongle    │
│           using signal strength          │
└─────────────────────────────────────────┘
```

Fig. 9

Sample all wireless transceivers

Create a sorted list with MAC -ids and their received signal strengths

highest received signal strength for one MAC-ID unique ?

Yes → Determine corresponding wireless transceiver to the MAC-ID

No →

Was the received signal unique in the previous sample unique ?

Yes → Determine corresponding wireless transceiver of last sample to the MAC-ID

No →

More than 2 transceiversreceived the same signal strength ?

No → Determine the transceiver in the middle of those transceivers to be the corresponding transceiver

Yes → Determine the mobile device to be in between the two wireless transceiver areas

Fig. 10

EP 3 319 241 A1

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/370917 A1 (BUCHHEIM JAMES [US] ET AL) 18 December 2014 (2014-12-18) * paragraph [0074] - paragraph [0081] * * paragraph [0157] - paragraph [0170] * * paragraph [0203] - paragraph [0280] * ----- | 1-15 | INV. H04B7/0491 H04W4/02 H04W16/28 H04W64/00 |
| A | US 7 489 282 B2 (LASTINGER ROC [US] ET AL) 10 February 2009 (2009-02-10) * column 4, line 33 - column 6, line 53 * ----- | 1-15 | |

TECHNICAL FIELDS
SEARCHED (IPC)

H04W
H04B

The present search report has been drawn up for all claims

| Place of search | Date of completion of the search | Examiner |
|---|---|---|
| Berlin | 19 May 2017 | Kalabic, Faris |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 19 7725

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2017

| Patent document cited in search report | | Publication date | Patent family member(s) | | Publication date |
|---|---|---|---|---|---|
| US 2014370917 | A1 | 18-12-2014 | NONE | | |
| US 7489282 | B2 | 10-02-2009 | CA 2595179 | A1 | 27-07-2006 |
| | | | EP 1856765 | A2 | 21-11-2007 |
| | | | KR 20070095354 | A | 28-09-2007 |
| | | | US 2006164320 | A1 | 27-07-2006 |
| | | | WO 2006078967 | A2 | 27-07-2006 |

For more details about this annex : see Official Journal of the European Patent Office, No. 12/82

**EP 3 319 241 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100238083 A1
- US 20140132412 A1
- US 20080161011 A1
- US 20140274112 A1